(19) **Europäisches Patentamt / European Patent Office / Office européen des brevets**

(11) **EP 4 233 338 B1**

(12) **EUROPEAN PATENT SPECIFICATION**

(45) Date of publication and mention
of the grant of the patent:
**04.06.2025 Bulletin 2025/23**

(21) Application number: **20958872.2**

(22) Date of filing: **21.10.2020**

(51) International Patent Classification (IPC):
*H04W 24/00* (2009.01)   *H04W 24/02* (2009.01)
*H04W 24/10* (2009.01)   *H04W 40/24* (2009.01)
*H04W 24/08* (2009.01)   *H04W 52/02* (2009.01)

(52) Cooperative Patent Classification (CPC):
**H04W 24/08; H04W 24/10;** H04W 52/0212;
H04W 52/0251; Y02D 30/70

(86) International application number:
**PCT/US2020/056659**

(87) International publication number:
**WO 2022/086522 (28.04.2022 Gazette 2022/17)**

(54) **DYNAMIC UE SIGNAL LEVEL CORRECTION FOR MEASUREMENT MODIFICATION AND/OR STATIONARITY DETECTION**

DYNAMISCHE UE-SIGNALPEGELKORREKTUR FÜR MESSMODIFIKATION UND/ODER STATIONARITÄTSERKENNUNG

CORRECTION DYNAMIQUE DE NIVEAU DE SIGNAL D'UE POUR UNE MODIFICATION DE MESURE ET/OU UNE DÉTECTION DE STATIONNARITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.08.2023 Bulletin 2023/35**

(73) Proprietor: **Nokia Technologies Oy**
**02610 Espoo (FI)**

(72) Inventors:
• **GÜRSU, Halit Murat**
**81371 Munich (DE)**
• **RATASUK, Rapeepat**
**Inverness, Illinois 60010 (US)**

• **MANGALVEDHE, Nitin**
**Hoffman Estates, Illinois 60010 (US)**
• **SIVASIVA GANESAN, Rakash**
**82008 Unterhaching (DE)**

(74) Representative: **Nokia EPO representatives**
**Nokia Technologies Oy**
**Karakaari 7**
**02610 Espoo (FI)**

(56) References cited:
EP-A1- 2 092 666     EP-A1- 3 110 200
EP-B1- 2 092 666     WO-A2-2020/069155
US-A1- 2013 322 279   US-A1- 2016 234 747
US-A1- 2017 013 490   US-A1- 2017 142 777
US-A1- 2020 228 919

**Description**

TECHNICAL FIELD

Exemplary embodiments herein relate generally to wireless networks and, more specifically, relates to determining whether user equipment (UEs) need measurement modifications, e.g., for radio resource management (RRM) modifications and/or are stationary in the networks.

BACKGROUND

In 3GPP Rel-17 (third generation project, release 17), reduced capability (RedCap) UEs will be introduced. See, e.g., Ericsson, "New SID on Support of Reduced Capability NR Devices", RP-193238, 3GPP TSG RAN Meeting #86, Sitges, Spain, December 9th - 12th, 2019. The intended use cases for RedCap UEs include the following.

1) Industrial wireless sensors: Communication service availability is 99.99% and end-to-end latency less than 100 ms. The reference bit rate is less than 2 Mbps (potentially asymmetric, e.g., uplink heavy traffic) for all use cases and the device is stationary. The battery should last at least a few years. For safety-related sensors, latency requirement is lower, 5-10 ms.
2) Video Surveillance: As described in 3GPP TR (technical report) 22.804 (see 3GPP TR 22.804 V16.3.0 (2020-07)), reference economic video bitrate would be 2-4 Mbps, latency < 500 ms, reliability 99%-99.9%. High-end video, e.g., for farming, would require 7.5-25 Mbps. It is noted that traffic pattern is dominated by UL (uplink) transmissions.
3) Wearables: Reference bitrate for a smart wearable application can be 10-50 Mbps in DL (downlink) and minimum 5 Mbps in UL and peak bit rate of the device is higher, 150 Mbps for downlink and 50 Mbps for uplink. Battery of the device should last multiple days (up to 1-2 weeks).

The study item (RP-193238) has the following objective:
Study UE power saving and battery lifetime enhancement for reduced capability UEs in applicable use cases (e.g. delay tolerant):

1) Reduced PDCCH (physical downlink control channel) monitoring by smaller numbers of blind decodes and CCE (control channel element) limits.
2) Extended DRX (discontinuous reception) for RRC (radio resource control) Inactive and/or Idle state.
3) RRM (radio resource management) relaxation for stationary devices.

One issue with these reduced capability UEs is determining stationarity of the devices.
EP2092666 describes methods for performing measurements in different periods by a user equipment being in a discontinuous reception mode. These periods have different frequency and dependent on measured signal strengths.
US 2016/234747 describes cell measurements which are periodic or trigger event based. The measurements may be suspended based on signal quality and cell changes.
EP3110200 describes methods for performing measurements by mobile terminal devices. These measurements are scheduled based on repetition periods.

BRIEF SUMMARY

This section is intended to include examples and is not intended to be limiting.
The invention is defined in the independent claims. Further embodiments are defined in the dependent claims.

BRIEF DESCRIPTION OF THE DRAWINGS

In the attached Drawing Figures:

FIG. 1 is a block diagram of one possible and non-limiting exemplary system in which the exemplary embodiments may be practiced;
FIG. 2 is an illustration of the variation of the path loss and shadowing with time in an In Factory Dense Clutter Low BS scenario as described in 3GPP TS 38.901, where two UEs are stationary at distances of 500 meters and 10 meters to the BS;
FIG. 3A illustrates the antenna radiation pattern of an omnidirectional UE, while FIG. 3B illustrates the antenna radiation pattern of a multipanel UE;

FIG. 4 is referred to as Table 1, and illustrates cell specific occurrences that may cause high variation, in an exemplary embodiment;

FIG. 5 is an illustration of path loss and shadowing of a stationary UE for two different cell settings;

FIG. 6 is a flowchart illustrating a UE's decision process to determine low, medium or high variation, in accordance with an exemplary embodiment;

FIG. 7 is a flowchart for UEs decision for RRM measurement relaxation, in accordance with an exemplary embodiment;

FIG. 7A is a flowchart for UEs decision for RRM measurement modification, in accordance with an exemplary embodiment;

FIG. 8 is a diagram of a message sequence chart for an exemplary embodiment;

FIG. 9 is a flowchart performed by a UE for measurement modification, in accordance with an exemplary embodiment; and

FIG. 10 .is a flowchart performed by a base station for measurement modification, in accordance with an exemplary embodiment.

DETAILED DESCRIPTION OF THE DRAWINGS

Abbreviations that may be found in the specification and/or the drawing figures are defined below, at the end of the detailed description section.

The word "exemplary" is used herein to mean "serving as an example, instance, or illustration." Any embodiment described herein as "exemplary" is not necessarily to be construed as preferred or advantageous over other embodiments. All of the embodiments described in this Detailed Description are exemplary embodiments provided to enable persons skilled in the art to make or use the invention and not to limit the scope of the invention which is defined by the claims.

The exemplary embodiments herein describe techniques for dynamic UE signal level correction for stationarity detection. Additional description of these techniques is presented after a system into which the exemplary embodiments may be used is described.

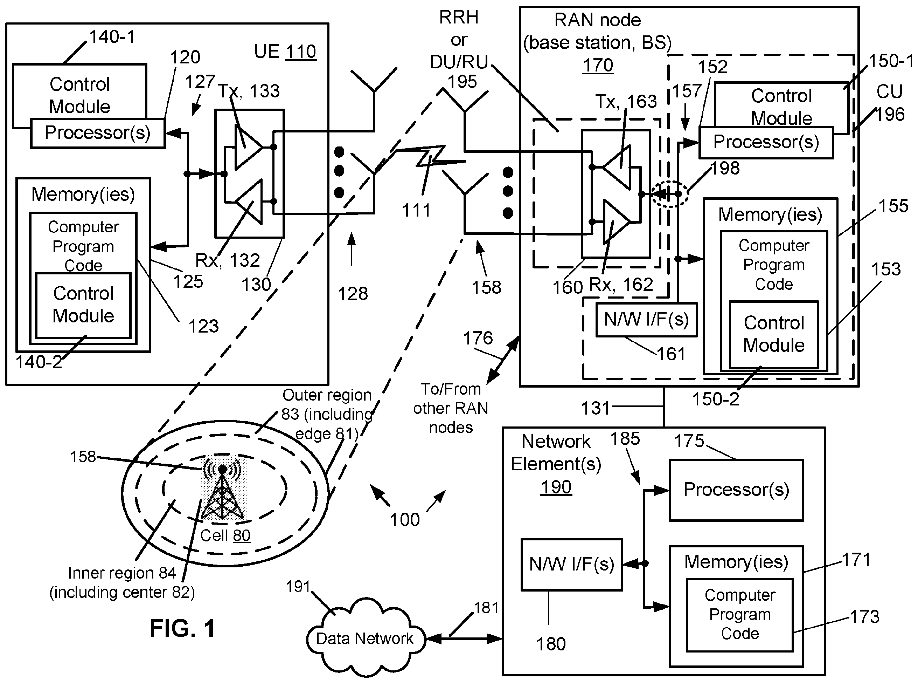

Turning to FIG. 1, this figure shows a block diagram of one possible and non-limiting exemplary system in which the exemplary embodiments may be practiced. A user equipment (UE) 110, radio access network (RAN) node 170, and network element(s) 190 are illustrated. In FIG. 1, a user equipment (UE) 110 is in wireless communication with a wireless network 100. A UE is a wireless, typically mobile device that can access a wireless network. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a control module 140, comprising one of or both parts 140-1 and/or 140-2, which may be implemented in a number of ways. The control module 140 may be implemented in hardware as control module 140-1, such as being implemented as part of the one or more processors 120. The control module 140-1 may be implemented also as an integrated circuit or through other hardware such as a programmable gate array. In another example, the control module 140 may be implemented as control module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 is a base station that provides access by wireless devices such as the UE 110 to the wireless network 100. In the text below, the term "base station" (or BS) is also used for the RAN node 170. The RAN node 170 may be, for instance, a base station for 5G, also called New Radio (NR). In 5G, the RAN node 170 may be a NG-RAN node, which is defined as either a gNB or an ng-eNB. A gNB is a node providing NR user plane and control plane protocol terminations towards the UE, and connected via the NG interface to a 5GC (e.g., the network element(s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by one gNB-DU. The gNB-DU terminates the F1 interface 198 connected with the gNB-CU. Note that the DU 195 is considered to include the transceiver 160, e.g., as part of an RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a control module 150, comprising one of or both parts 150-1 and/or 150-2, which may be implemented in a number of ways. The control module 150 may be implemented in hardware as control module 150-1, such as being implemented as part of the one or more processors 152. The control module 150-1 may be implemented also as an integrated circuit or through other hardware such as a programmable gate array. In another example, the control module 150 may be implemented as control module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the control module 150 may be distributed, such as being distributed between the DU 195 and the CU 196, or be implemented solely in the DU 195.

The one or more network interfaces 161 communicate over a network such as via the links 176 and 131. Two or more RAN nodes 170 communicate using, e.g., link 176. The link 176 may be wired or wireless or both and may implement, e.g., an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, e.g., fiber optic cable or other suitable network connection to connect the other elements (e.g., a central unit (CU), gNB-CU) of the RAN node 170 to the RRH/DU 195. Reference 198 also indicates those suitable network link(s).

The wireless network 100 may include a network element or elements 190 that may include core network functionality, and which provides connectivity via a link or links 181 with a data network 191, such as a telephone network and/or a data communications network (e.g., the Internet). Such core network functionality for 5G may include access and mobility management function(s) (AMF(s)) and/or user plane functions (UPF(s)) and/or session management function(s) (SMF(s)). Such core network functionality for LTE may include MME (Mobility Management Entity)/SGW (Serving Gateway) functionality. These are merely exemplary functions that may be supported by the network element(s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

It is noted that description herein indicates that "cells" perform functions, but it should be clear that the base station that forms the cell will perform the functions. The cell makes up part of a base station. That is, there can be multiple cells per base station. For instance, there could be three cells for a single carrier frequency and associated bandwidth, each cell covering one-third of a 360-degree area so that the single base station's coverage area covers an approximate oval or circle. Furthermore, each cell can correspond to a single carrier and a base station may use multiple carriers. So, if there are three 120-degree cells per carrier and two carriers, then the base station has a total of 6 cells.

In the example of FIG. 1, a "cell" 80 is illustrated, having an outer region 83 (including an edge 81 of the cell) and an inner region 84 (including a center 82 of the cell). For instance, the inner region 84 may be a known region within some set distance from the center 82 of the cell 80, and the outer region 83 may be a known region within some set distance from the edge 81 of the cell 80. These terms are used below to describe effects that occur in in these locations. Note also that this "cell" 80 may be three individual, 120-degree cells as described above, but for ease of reference, the cell 80 is shown as an oval.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor-based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general-purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, vehicles with a modem device for wireless V2X (vehicle-to-everything) communication, image capture devices such as digital cameras having wireless communication capabilities, gaming devices having wireless communication capabilities, music storage and playback appliances having wireless communication capabilities, Internet appliances (including Internet of Things, IoT, devices) permitting wireless Internet access and possibly browsing, IoT devices with sensors and/or actuators for automation applications with wireless communication tablets with wireless communication capabilities, as well as portable units or terminals that incorporate combinations of such functions.

Having thus introduced one suitable but non-limiting technical context for the practice of the exemplary embodiments, the exemplary embodiments will now be described with greater specificity.

Before proceeding to describe the exemplary embodiments, it is helpful to provide an overview of this technological area. Some technical standards do not describe determining whether a UE is stationary, but there is the related concept of "mobility", including "low mobility". For instance, it is specified in 3GPP TS 36.304 (see 3GPP TS 36.304 V16.1.0 (2020-07)) that UEs use received signal strength to detect what their mobility states are. The physical layer details are in 3GPP TS 38.304. Further details on signaling can also be found in 3GPP TS 38.133. In 3GPP TS 36.304, low mobility is not discussed, but instead normal/medium/high mobility are introduced. The low mobility introduced in 3GPP TS 38.304 is an extension of the mobility concepts in 3GPP TS 36.304. In these schemes, a UE compares its received signal strength to a cell specific signal variation parameter broadcast by the BS. The stationarity detection has been problematic in LTE for UEs in the outer region 83 (e.g., a cell edge 81) of the cells and also in the inner region 84 (including the cell center 82) of the cells 80, as the UEs observe different signal variations. With the introduction of NR, there are many novel factors introduced that affect the UE's signal strength variation, such as antenna types, device capabilities and many more. Thus, with NR, it is generally not possible to detect stationarity via a cell specific variation parameter for a wider range of UEs.

Two examples are detailed below.

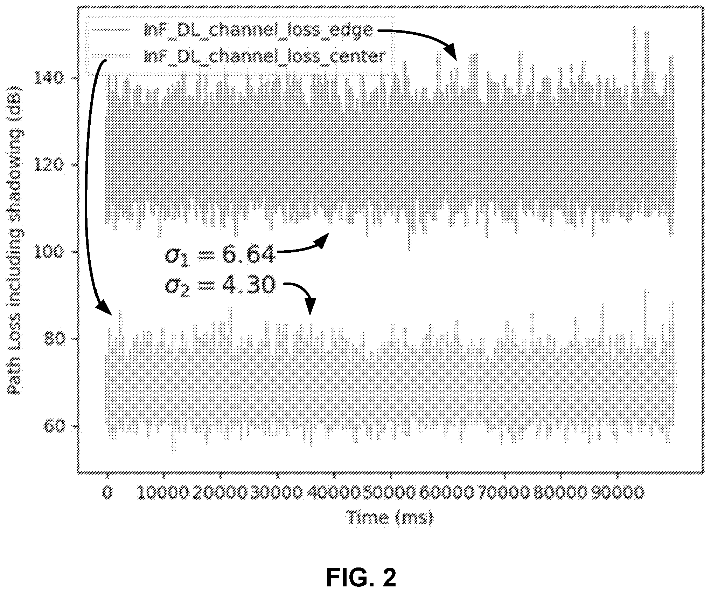

1) In one example of this problem, a UE1 that is closer to the cell edge 81 would experience a higher signal variation compared to a UE2 that is closer to the center 82 of the cell as a result of lower chance of a LoS path with increasing distance. FIG. 2 helps to illustrate this issue.

With reference to FIG. 2, this figure is an illustration of the variation of the path loss and shadowing with time in an In Factory Dense Clutter Low Base Station scenario as described in 3GPP TS 38.901, where two UEs are stationary between at distance 500 meters (see InF_DL_channel_loss_edge) and 10 meters (see InF_DL_channel_loss_center) to the BS. In FIG. 2, a scenario with a cell radius of 500 m with the shadowing and path loss exponents as specified in TR 38.901 is illustrated. Two UEs are stationary, one close to the cell edge 81 and one close to the cell center 82, at distances 10m and 500m to the BS, respectively. A measurement is performed each 1 ms as depicted by the x-axis. The y-axis depicts the path loss in dB. The curve marked as InF_DL_channel_loss_edge depicts the path loss and shadowing observed for close to cell edge UE and the curve marked InF_DL_channel_loss_center depicts the path loss and shadowing observed for close to cell center UE. The standard deviations of signal strength of both scenarios are depicted on the curve as 6.64 ($\sigma_1$) and 4.30 ($\sigma_2$), respectively. The main reason for this is that the LoS probability decreases with increasing distance to the base station. The standard deviation of LoS shadowing is a lot lower compared to NLoS shadowing (not shown in FIG. 2), 4.3 and 7.2, respectively. The amount of variation will strictly depend on the cell settings.

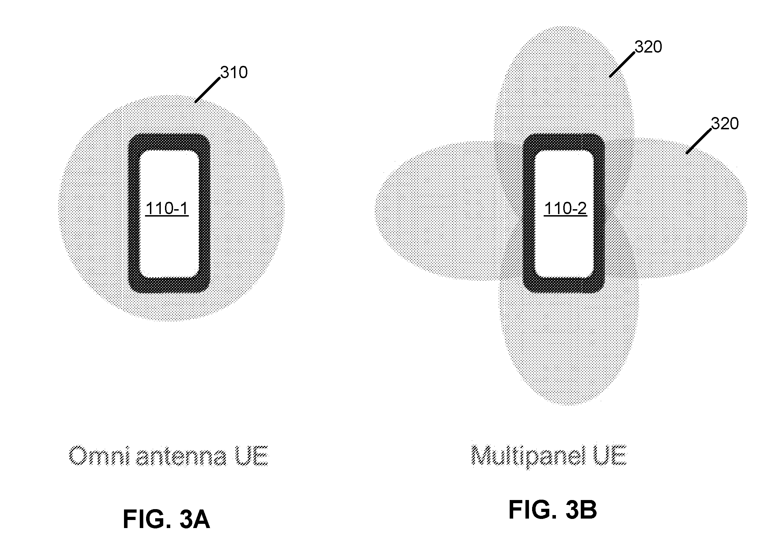

2) In another example of the problem, a UE1 with an omnidirectional antenna that is rotating in a (e.g., somewhat) fixed position would experience no change in its measurements while a UE2 with directional antenna would experience sudden changes in measurements due to its rotation. FIG. 3A illustrates the antenna radiation pattern 310 of an omnidirectional UE 110, while FIG. 3B illustrates the antenna radiation pattern 320 of a multipanel UE 110.

In more detail, the UEs are expected to deploy various antenna types out of which may be the omnidirectional antenna (FIG. 3A) and a multipanel antenna (FIG. 3B). In the omni antenna (i.e., omnidirectional antenna) case in FIG. 3A with a UE 110-1, it is clear that when a UE 110-1 is stationary, irrespective of its rotation, the received power will be similar. However, for a multipanel UE 110-2 of FIG. 3B, the rotation will impact the signal power observed and can hinder the stationarity detection. This will be particularly specific to the radiation pattern of the antenna and the behavior of the UE. Similarly, base stations are already located with many antenna types that are configured in multiple ways physically and electronically. Thus, UE-specific and a cell-specific variation is expected.

In both of these scenarios, the BS has the following two choices.

1) The BS can set the RSRP variation threshold to detect stationarity for UE1 (close to cell edge UE or multipanel UE). In this case, as higher variations are tolerated, even though UE2 (close to cell center UE or omni antenna UE) is mobile, the UE2 110-2 may be identified as stationary, leading to a false positive.

2) The BS can set the RSRP variation threshold to detect stationarity for UE2 110-2. In this case, as only lower variations are tolerated, the stationarity for UE1 110-1 cannot be detected. This would lead to a false negative.

Furthermore, these examples are not exhaustive, and a scenario-specific variation of the signal level can be extended to other scenarios. These embodiments can be extended and reliable stationarity detection cannot be achieved in many scenarios. Detection of stationarity is needed for radio measurement relaxation, RAN notification area update, tracking area update and many signaling procedures to cover the problems that can be raised by the mobility of the UE. Measurement relaxation allows the UE to perform fewer measurements over time (e.g., than currently performed under a current configuration), such as the UE will perform measurements less frequently, the UE is allowed to skip some measurements, the UE is allowed to determine when to perform measurements, and/or the UE will measure fewer cells or frequencies. It is also noted that "measurement relaxation" may include the "relaxed measurements" in, e.g., 3GPP TS 38.304 or other technical standards.

Importantly, such problems cannot be solved only at the UE side, as the variations are affected by the cell settings. That is, the BS has to communicate additional parameters to achieve stationary detection.

With respect to exemplary embodiments herein, first an overview is provided, then more details are provided. As an overview, exemplary embodiments herein include a method in, e.g., cellular networks for a UE to detect if the UE is stationary or not. The method involves a cell specific signal variation parameter and a high/medium variation parameter calculated and broadcast by a BS in a cell and a UE detecting if the UE has high signal variation or not. One exemplary idea is to group the variations seen by different UEs as low, medium and high signal variations. The BS broadcasts a signal variation parameter corresponding to each of the three variation groups. Three new parameters are defined, in an exemplary embodiment, as part of the new stationarityEvaluation configuration: SSearchDeltaP (different from a legacy value defined in lowMobilityEvaluation), stationary_UE_medium_variation_correction, and stationary_UE_high_variation_correction. These are described in more detail below, but can be used to place the UE into one of the three variation groups. Each UE identifies itself to be in one of these three variation groups and will use the corresponding variation parameter to detect stationarity. Note that using three variation groups is merely exemplary, and fewer or more groups could be used.

Exemplary operations may include the following.

1) The Base Station broadcasts SSearchDeltaP in a new parameter stationarityEvaluation with relaxedMeasurement configuration in SIB2.

2) In addition to this cell-specific parameter, the BS also broadcasts additional high/medium variation parameters [e.g., stationary_UE_high_variation_correction, stationary_UE_medium_variation_correction], and a new parameter stationarityEvaluation in, e.g., SIB2. In an example, "stationarityEvaluation" is a configuration container, contained in the relaxedMeasurement configuration. The relaxedMeasurement configuration also includes the parameters for high and medium variation in an example.

3) The UE has performed intra-frequency or inter-frequency measurements for at least time TSearchDeltaP after (re-) selecting a new cell.

4) If the UE supports relaxed measurements and relaxedMeasurement is present in SIB2, the UE may further relax the needed measurements, as specified in clause 5.2.4.9 of 3GPP TS 38.304.

5) The UE sets Srxlev.Ref = Srxlev when a new serving cell has been selected or reselected.

6) The UE detects if the UE is a high/medium signal variation UE or not (i.e., it is a low signal variation UE). For this detection, the UE may use a logic that combines its configuration, its state, and the parameters broadcast by the BS. The state of the user equipment can be based on its location, received power, antenna type, and/or capability. An exemplary decision mechanism is detailed below in section 2.1 below.

7) The UE determines whether the UE is stationary by evaluating a criterion that depends on the signal variation as detected in the previous operation:

a) If a UE has high signal variation, then the UE uses the following:

$$Srxlev.Ref - Srxlev < SSearchDeltaP +$$

$$stationary\_UE\_high\_variation\_correction.$$

b) If a UE has medium signal variation, then the UE uses the following:

$$Srxlev.Ref - Srxlev < SSearchDeltaP +$$

$$stationary\_UE\_medium\_variation\_correction.$$

c) Otherwise, the UE uses the following:

$$Srxlev.Ref - Srxlev < SSearchDeltaP.$$

8) If the criterion for stationarity tested by the UE is fulfilled:

a) The UE concludes it is stationary.
b) This may be used to relax RRM measurements or perform other procedures; however, how the stationarity detection outcome is used is not detailed in this disclosure.

9) Otherwise, the UE concludes the UE is not stationary and as such the UE does not modify its behavior.

Now that an overview has been provided, additional details are provided. For ease of reference, the rest of this document is divided into labeled sections. The labeling is merely for reference and is not intended to be limiting.

1) Examples of setting of the "stationary_UE_high_variation_correction" parameter

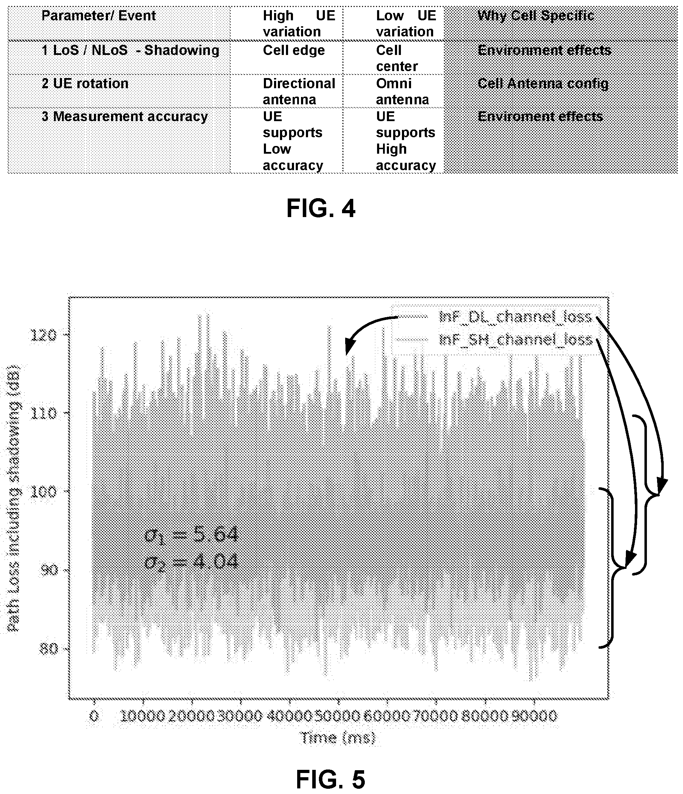

The table in FIG. 4 summarizes parameters and events that would affect the setting of aforementioned parameter. FIG. 4 is referred to as Table 1, and illustrates cell specific occurrences that may cause high variation. The columns indicate the parameter event, the high UE variation, the low UE variation, and why these are cell-specific. The rows are for the following: 1, LoS/NLoS shadowing; 2, UE rotation; and 3, measurement accuracy.

1.1) Exemplary description of cases that need correction

In the following sections, UE variation scenarios are detailed. Initially, the reasons for observing UE-specific variations are explained . This is followed by the explanation of why each problem can be solved by a parameter broadcast from the BS and cannot be solved by UE by itself.

1.1.1) Examples of LoS / NLoS - Shadowing

Increasing the distance to the base station 170 decreases the probability of a LoS path to the BS 170. Consequently, a UE 110 near the edge 81 of the cell 80 will have mostly NLoS to the BS.
Another important piece of information is the effect of shadowing with respect to LoS and NLoS. Shadowing causes the signal received by the UE to fluctuate. Typically, with NLoS, a UE 110 has higher variations compared to LoS variations. Shadowing is the effect of an object blocking the electro-magnetic signals, e.g., like the sun rays, resulting in a shadow. As the signal is reflected from many different objects, there is not a complete blockage of the electro-magnetic signal, but decreasing its strength.
Thus, combining these two pieces of information, one can see that a UE that is further away from the BS observes higher signal variation compared to the UE that is closer to the BS.
However, one can argue that the UE can detect its distance to the BS and correct this change in signal variation. This would be true if the amount of variations would not depend on the cell settings. Referring to FIG. 5, this figure is an illustration of path loss and shadowing of a stationary UE for two different cell settings. The curve labeled as "In-F_DL_channel_loss" depicts a dense clutter of machines in a factory environment with a BS located in the clutter. The bracket on the right is used to indicate a "main" portion of the curve. Meanwhile, the curve "InF_SH_channel_loss" depicts a dense clutter of machines with a BS located above the clutter in a factory environment. The bracket on the right is used to indicate a "main" portion of the curve. It is noted, therefore, that cell-specific variation can be perceived differently for different UE types.

It can be seen that even if all the UE parameters are kept the same except the cell settings, the variations observed by two UEs are different as emphasized by the standard deviations, 4.04 ($\sigma_1$) and 5.64 ($\sigma_2$) in sparse and dense clutters, respectively. This emphasizes the need of a variation parameter by each BS depending on the cell settings.

1.1.2) UE rotation/antenna type examples

The UEs are expected to deploy various antenna types, out of which may be the omnidirectional antenna and a multipanel antenna. In the omni antenna case, it is clear that when a UE is stationary, irrespective of its rotation, the received power will be similar. However, for a multipanel UE, some physical rotation of the UE will impact the signal power observed and can hinder the stationarity detection. This will be particularly specific to the radiation pattern of the antenna and the behavior of the UE.

Similarly, base stations are already located with many antenna types that are configured in multiple ways physically and electronically. Thus, the matching between the UE and the BS antenna type will play an important role with respect to each cell.

1.1.3) Examples Concerning UE bandwidth / Measurement accuracy

There are many factors that can affect the measurement accuracy of a UE. Some of these can be related to implementation, while some are related to the BW allocated to the UE by the network. Intuitively, the wider bandwidth that is used for measurements, the more precise the measurements are for the UE.

Similar to the first scenario in section 1.1, the amount of variations with respect to the measurement accuracy will depend on the cell settings.

1.2) The base station setting the value of parameters in exemplary embodiments

The methodology to set the parameters of stationary_UE_high/medium_variation_correction can follow the logic used to set SSearchDeltaP (which is currently considered in the specifications). Below are additional processes to set this parameter.

1. Using site/cell measurement campaigns.
2. Building an estimator following user UL reference signals.
3. Using parameters affected by RRM measurement relaxation, and, i.e., fine tuning relaxation with respect to change of these parameters. One parameter affecting the setting of the variation parameter can be RLF. If a UE performs false stationarity detection, i.e., variation parameter is set too high, the UE 110 may experience more frequent RLF and this may call for reducing the variation parameter.

    a. However, UEs are not reporting which "UE variation correction parameters" they are using, so correlating the UE RLF parameter to the "UE variation correction parameters" is not necessarily intuitive.
    b. Similarly, having too low of correction would be harder for the BS to observe, as the correction mostly affects the UE. So, in an exemplary embodiment, the BS 170 can try to be on the aggressive side and use a high "variation value". This could result in more RLF. If so, then the BS can reduce the "variation value" and can monitor the RLF for further adjustments.

Note that one BS 170 can communicate the information in this section between this base station and other base station(s) and can coordinate setting the values for high/medium variations. For instance, the values of stationary_UE_high/medium_variation_correction can be communication from this base station to other base stations during the processes above, and this could help coordination to set these values.

2) Stationary UE variation detection examples

The UE variation detection merges cell-specific measurements with UE configuration.

2.1) Examples of stationary UE high variation parameters

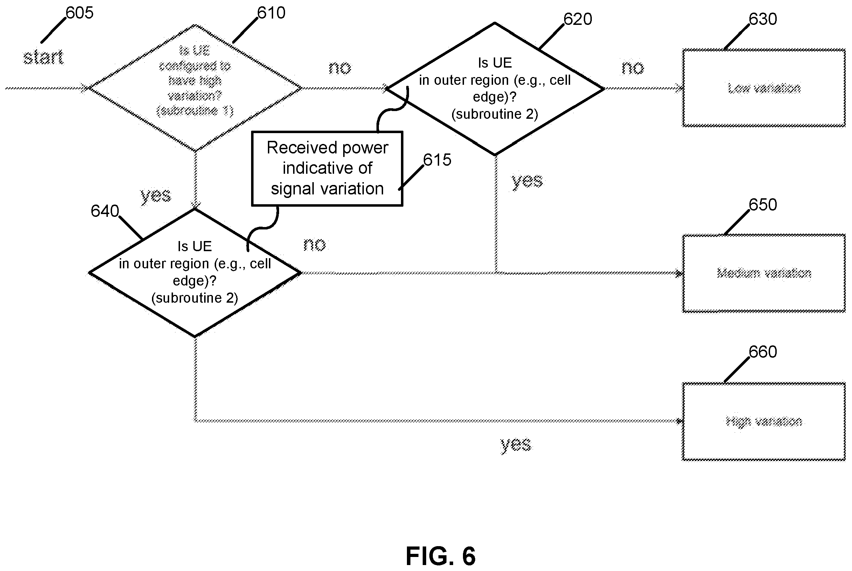

As independent embodiments causing higher perceived signal level variation for the UE can occur, the UE should merge these cases to adjust its variation correction parameter, as illustrated in FIG. 6. FIG. 6 is a flowchart illustrating the UE's decision of low, medium or high variation, in accordance with an exemplary embodiment. FIG. 6 illustrates the operation of exemplary methods, a result of execution of computer program instructions embodied on a computer readable memory, functions performed by logic implemented in hardware, and/or interconnected means for performing functions in accordance with exemplary embodiments. FIG. 6 is performed by a UE 110, e.g., under control of a control module 140, at least in part.

The flow starts 605 and in block 610, the UE 110 determines if the UE is configured to have high variation. The process for this determination is referred to as "subroutine 1".

That is, the UE initially checks if it is configured for high variation through subroutine 1. Subroutine 1 involves the UE's capabilities, including, e.g., physical and software configurations, that can lead to high variation. One example can be the antenna type of the UE and can be set as a flag in the decision mechanism. That is "if antenna type is multi-panel, set high variation to true". Different UEs have different numbers of antennas, this can be a physical configuration and provide different capability. Also, some UEs may disable the use of some antennas through software configuration even though they physically have those antennas, and this also is a capability of the UE. That would be an example of software configuration. Similar examples can be given for bandwidth, half duplexing and so on, as examples of capabilities of the UE. The measurement accuracy is again a configuration of the device and this can be set directly through a flag in the UE.

After the subroutine 1, the UE goes through subroutine 2. That is, the no result from block 610 passes to block 620, which performs subroutine 2. The yes result from block 610 passes to block 640, which also performs subroutine 2. The subroutine 2 is a bit more complex than subroutine 1, as this subroutine aims to detect the location of the UE, i.e., whether if the UE is in the outer region 83 of the cell 80, such as being on a cell edge 81, or not.

For subroutine 2, the UE gathers $RSRP_{ave}^{t}$ values for multiple cells, and, as one would expect for a UE in the outer region 83 (e.g., on the cell edge 81), these values should be closer to each other than if the UE were farther away from the outer region 83/cell edge 81. The $RSRP_{ave}^{t}$ for multiple cells is compared by a threshold, e.g., cell_edge_measurements_tolerance, and the UE can decide whether the UE is in the outer region 83 (e.g., on the cell edge 81) or not.

Consider the following example:

$$RSRP_{ave}^{t}\,(cell1) - RSRP_{ave}^{t}\,(cell2) \leq cell_{edge\ measurement\ tolerance}$$

where the right-hand side may have measurements in, e.g., dBm, and the left-hand side has a comparison value, e.g., in dBm. Note that the use of dBm is merely exemplary, and other units might be used.

If the above condition holds, the UE would return yes, otherwise the UE would return no.

[0060] In block 620, if the UE determines it is not in the outer region 83 (e.g., on the cell edge 81) (block 620 = no), then the UE determines the UE has low variation in block 630. If the UE determines it is in the outer region 83 (e.g., on the cell edge 81) for block 620 (block 620 = yes) or if the UE determines it is not in the outer region 83 (e.g., on the cell edge 81) for block 640 (block 640 = no), the UE determines in block 650 that it has medium variation. If the UE determines it is in the outer region 83 (e.g., on the cell edge 81) for block 640 (block 640 = yes), the UE determines in block 660 that it has high variation. Each of the three variations in 630, 650, and 660 are groups, and there could be more or fewer groups.

It is noted that another alternative rather than (or possibly in addition to) determining a location of the UE and whether the UE is in an outer region of a cell is to use received power (see block 615) as an indicator of signal variation. The received power might be more indicative of the signal variation level (e.g., low received power (e.g., RSRP) means higher variation) and the received signal power is in a way related to location but not always.

In another embodiment, the UE can report its configuration and some additional parameters related to its signal reception. Thus, the variation of a UE can be decided by the base station. Also, the UE can detect its signal level variation and report this to the BS.

2.2) Stationary UE detection logic in exemplary embodiments

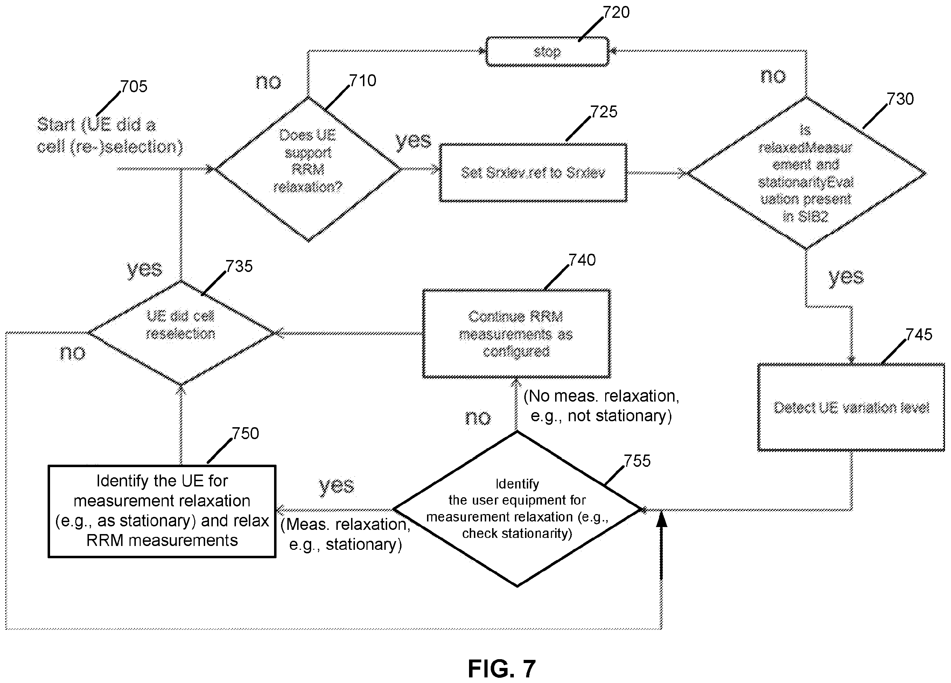

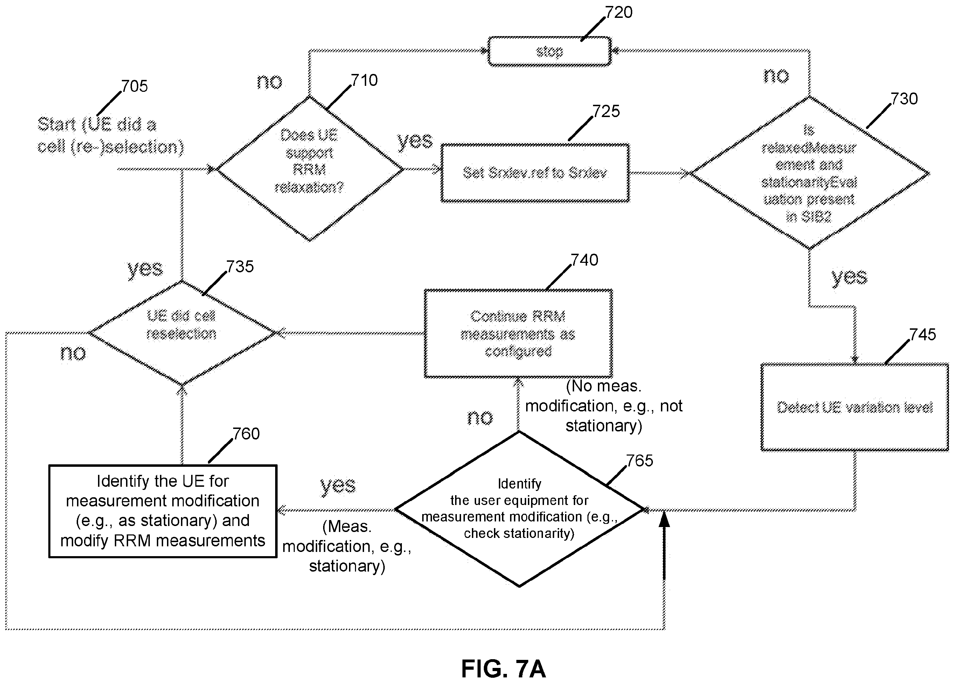

This section uses FIG. 7 as an exemplary embodiment. FIG. 7 is a flowchart for UEs decision for RRM measurement relaxation, in accordance with an exemplary embodiment. FIG. 7 illustrates the operation of exemplary methods, a result of execution of computer program instructions embodied on a computer readable memory, functions performed by logic implemented in hardware, and/or interconnected means for performing functions in accordance with exemplary embodiments. FIG. 7 is performed by a UE 110, e.g., under control of a control module 140, at least in part.

   1) In step 705, the UE performs a cell (re-)selection.

2) In block 710, the UE 110 checks if the UE supports RRM relaxation.

    i. If not (block 710 = no), the UE stops the stationary UE detection logic in block 720.
    ii. If the UE supports RRM relaxation (block 710 = yes), the UE sets (block 725) srxlev.ref to srxlev. The srxlev is a processed measurement value set as srxlev = Qrxlevmeas - Qrxlevmin + QrxlevminOffset- Pcompenstation as described in 3GPP TS 25.133. In more detail, once the UE performs cell selection, the UE sets Srxlev.Ref as the initial measurement from the serving cell, e.g., measured in dBm, although other units may be used. The Srxlev.Ref value can be updated with a period T. Srxlev is the instantaneous serving cell measurement value, e.g., in dBm (as one example of a unit that might be used), and the UE performs this measurement a lot more frequently than period T.
    iii. Srxlev.ref will be used to detect stationarity later on.

3) The UE receives SIB2 and checks (block 730) if relaxedMeasurement and stationarityEvaluation are present in SIB2.

    i. If these are not present (block 730 = no), the UE stops the stationary UE detection logic in block 720.
    ii. Otherwise (block 730 = yes), the UE 110 detects the UE variation level in block 745.

4) The UE variation is detected as described in section 2.1.

5) The UE identifies (block 755) the UE for measurement relaxation. While other options are possible, a check of stationarity may be used, such that a UE determined to be stationary is identified for measurement relaxation and a UE that is not determined to be stationary is not identified for measurement relaxation. Block 755 is based on the outcome of the step 4 as follows.

    i. If a UE has high signal variation, then the UE uses the following:

$$\text{Srxlev.Ref - Srxlev} < \text{SSearchDeltaP} + \text{stationary\_UE\_high\_variation\_correction}.$$

    ii. If a UE has medium signal variation, then the UE uses the following:

$$\text{Srxlev.Ref - Srxlev} < \text{SSearchDeltaP} + \text{stationary\_UE\_medium\_variation\_correction}.$$

    iii. Otherwise, the UE uses the following:

$$\text{Srxlev.Ref - Srxlev} < \text{SSearchDeltaP}.$$

With respect to the equations above, the UE compares the left-hand part that the UE measured, with the right-hand part. If the inequality mathematically holds for a period of time, e.g., of a predetermined time period T, then the UE declares the stationarity is detected.

As the parameters are used to detect different variations of the signal level, medium and high variation parameters can be different. It is expected that the medium variation will be smaller (e.g., in absolute value) than the high variation parameter. If a medium variation is used, stationary is less likely to be detected than if the high variation is used.

Srxlev represents, in an exemplary embodiment, the filtered outcome of recent measurements, i.e., layer 1 filtering. In one embodiment, the BS can communicate to the UE different timer parameters for different variation levels. Different timer parameters may depict the need to use different number of samples for filtering of measurements, i.e., layer 1 filtering. Also, different timer parameters may depict different sliding window for filtering, i.e., layer 1 filtering.

These timer parameters may be part of parameters configured for the UE, and the UE may use these to determine the estimate of the level of signal variance. For instance, first and second timer parameters may be configured (e.g., by the BS) for the UE. The UE may use the first timer parameter to determine the estimate of the level of signal variance as having the high signal variation. The UE may use the second timer parameter to determine the estimate of the level of signal variance as having the medium signal variation.

6) If the condition in step 5 is fulfilled (block 755 = yes, meaning meas. relaxation is suitable, such as the UE is stationary):

i. The UE identifies the UE as being suitable for measurement relaxation (being stationary, e.g., by setting a stationarity flag) (see block 750). The reason a flag (or other indication) can be used is because stationarity can be beneficial for other features.

ii. The UE relaxes the RRM measurements (see block 750) and extends its measurement periodicity, such as to 24 hours.

iii. And, the UE checks if the UE performed a cell re-selection (block 735). If yes (block 735 = yes), then the UE re-starts the UE detection logic by proceeding to step 705.

iv. Optionally, the UE reports its stationarity to the BS through RNA update for signaling procedure optimization, i.e., mobility signaling.

7) Otherwise (block 735 = no), the UE 110 goes back to checking (block 755) stationarity with each new measurement.

8) If the condition in step 5 is not fulfilled (block 755 = no, meaning the UE is not suitable for meas. relaxation, e.g., is not stationary):

i. The UE continues RRM measurements (see block 740) as previously configured.

ii. And, the UE checks if the UE performed a cell re-selection in block 735.

i. If yes, (block 735 = yes), the UE then re-starts the UE detection logic in block 705.

ii. Otherwise (block 735 = no), the UE goes back to checking stationarity with each new measurement in block 755.

The description in FIG. 7 highlights identifying the UE for measurement relaxation, to check stationarity of the UE. While checking stationarity of the UE can lead to measurement relaxation, stationarity itself can be used even independently of measurement relaxation. For instance, the determination of the level of signal variation and the checking the corresponding condition(s) using the new parameters described above and herein can be used for stationarity detection rather than measurement relaxation. Stationarity can also be useful for many use cases other than measurement relaxation, such as adjusting the rate of tracking area update or RAN notification area update, and timing advance optimization, as some examples.

In another embodiment, a UE-specific signal variation correction parameter for each UE is transmitted through RRC signaling to the UE 110 from the BS 170. This value is specific to a UE. This incurs extra overhead, as transmitting the parameter requires specific signaling to each UE. And the above-mentioned method, where the UEs are grouped in high and medium variation, is more resource efficient to utilize. Regardless, transmitting the parameter separately to each UE is a viable alternative.

The examples above consider mainly RRM measurement relaxation, where time between RRM measurements is extended from a current time to a longer time. It is, however, possible to modify the time between RRM measurements in a different way. For instance, the signal variation in FIG. 6 may change from when a UE performs the flow in FIG. 6 to another time when the UE performs the flow in FIG. 6. The flow in FIG. 7 may also be modified, based on change in signal variation or the other factors in FIG. 7. FIG. 7A illustrates the concept where time between RRM measurements may be modified by shortening or lengthening (or keeping the same) a current time between RRM measurements

Turning to FIG. 7A, this is a flowchart for UEs decision for RRM measurement modification, in accordance with the claimed embodiment. FIG. 7A illustrates the operation of methods, a result of execution of computer program instructions embodied on a computer readable memory, functions performed by logic implemented in hardware, and/or interconnected means for performing functions in accordance with embodiments. FIG. 7A is performed by a UE 110, e.g., under control of a control module 140, at least in part. The blocks in FIG. 7A mirror those in FIG. 7, except for new blocks 760 and 765, which correspond respectively to blocks 750 and 755.

In block 765, the UE identifies whether the UE should be identified for measurement modification, and one factor can be stationarity of the UE. If there is no measurement modification (block 755= no), the flow proceeds to block 740. If there is measurement modification (block 755= yes), the flow proceeds to block 760. In block 760, the UE is identified for measurement modification and the RRM measurements are modified by increasing or decreasing the time between RRM measurements from a current time to an increased or decreased time, as the case may be. Flow proceeds to block 735, which is described above.

3) Possible modifications to the system information block

While there are other ways to support implementing the exemplary embodiments, one option is to modify relaxedMeasurement configuration in SIB2. To support the exemplary embodiments, and in an exemplary embodiment, a stationarityEvaluation container could be used. The container may be contained in a relaxedmeasurement configuration, and include the s-SearchDeltaP-r16 and t-SearchDeltaP-r17 parameters. This relaxedMeasurement configuration also may contain the parameters for high/medium variation correction, e.g., stationary_UE_high_variation_correction and stationary_UE_medium_variation_correction. This is only one example of how these might be implemented, and other examples are possible.

4) Examples

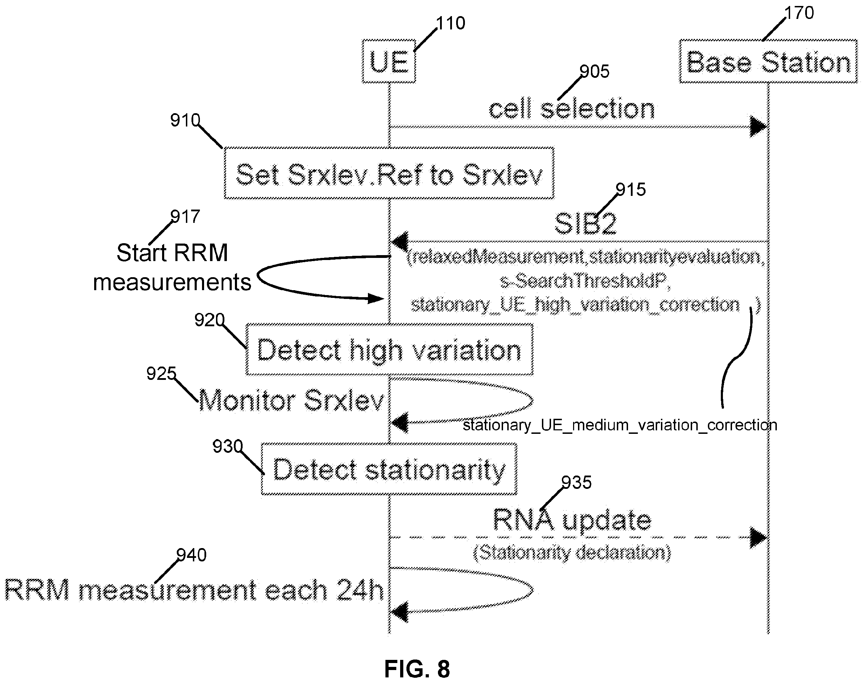

This section relates one possible example. This example uses FIG. 8, which is a diagram of a message sequence chart for an exemplary embodiment. FIG. 8 also illustrates the operation of exemplary methods, a result of execution of computer program instructions embodied on a computer readable memory, functions performed by logic implemented in hardware, and/or interconnected means for performing functions in accordance with exemplary embodiments. FIG. 8 is performed by a UE 110, e.g., under control of a control module 140, at least in part, and by a BS 170, e.g., under control of a control module 150, at least in part.

In FIG. 8, the UE 110 connects to a new cell, e.g., via cell selection signaling 905. The UE sets Srxlev.Ref to Srxlev in block 910.

The UE acquires SIB2 (from signaling 915) and detects the relaxedMeasurement is set in SIB2. It also detects that the optional parameter stationarityEvaluation is available. The s-SearchThresholdP is also detected. Further, the UE 110 extracts the stationarity_UE_high/medium_variation_correction parameters.

The UE starts the RRM measurements in operation 917. Assume the UE in this example is an omni-antenna UE having high measurement accuracy and the UE is in the outer region 83 (e.g., or close to the cell edge 81). The UE detects (block 920) that the UE is in the outer region 83 (e.g., or close to the cell edge 81), using logic given in 2.1, described above.

As the UE decides it is a high variation UE, the UE 110 decides to use the stationary_UE_high_variation_correction parameter to detect stationarity. The UE in block 925 measures Srxlev periodically.

The UE considers Srxlev.Ref - Srxlev < SSearchDeltaP + stationary_UE_high_variation_correction, and the UE observes that the inequality holds for a period of T-searchDeltaP. The UE therefore detects it is stationary in block 930.

The UE optionally reports that it is stationary in RNA update 935, with a stationarity declaration. The UE extends its RRM measurement timer (see reference 940), in this example to be 24 hours. That is, each 24-hour period, the UE wakes up and performs the RRM measurements and determines if the previous conditions still hold. Although a 24-hour period is used, other periods shorter or longer than that may also be used.

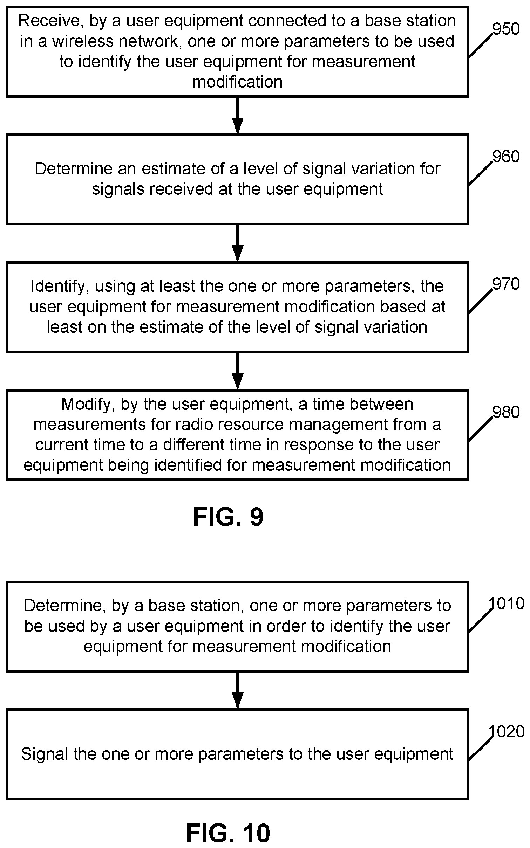

Turning to FIG. 9, this figure is a flowchart performed by a UE for measurement modification, in accordance with an exemplary embodiment. FIG. 9 illustrates the operation of exemplary methods, a result of execution of computer program instructions embodied on a computer readable memory, functions performed by logic implemented in hardware, and/or interconnected means for performing functions in accordance with exemplary embodiments. FIG. 9 is performed by a UE 110, e.g., under control of a control module 140, at least in part.

In block 950, the UE 110 receives one or more parameters to be used to identify the user equipment for measurement modification. The UE 110 is connected to a base station 170 in a wireless network 100. In block 960, the UE 110 determines an estimate of a level of signal variation for signals received at the UE 110. The UE 110, in block 970, identifies, using at least the one or more parameters, the user equipment for measurement modification based at least on the estimate of the level of signal variation. The UE 110 in block 980 modifies, by the user equipment, a time between measurements for radio resource management from a current time to a different time in response to the user equipment being identified for measurement modification.

It is noted that the modification in time between measurements may be similar to the previously described measurement relaxation. As described above, measurement relaxation allows the UE to perform fewer measurements over time (e.g., than currently performed under a current configuration), such as the UE will perform measurements less frequently, the UE is allowed to skip some measurements, the UE is allowed to determine when to perform measurements, and/or the UE will measure fewer cells or frequencies. In case the time between measurements is decreased, the UE can perform more measurements over time (e.g., than currently performed under a current configuration), such as the UE will perform measurements more frequently, the UE is not allowed to skip some measurements, the UE is not allowed to determine when to perform measurements, and/or the UE will measure more cells or frequencies.

FIG. 10 is a flowchart performed by a base station for measurement modification, in accordance with an exemplary embodiment. FIG. 10 illustrates the operation of exemplary methods, a result of execution of computer program instructions embodied on a computer readable memory, functions performed by logic implemented in hardware, and/or interconnected means for performing functions in accordance with exemplary embodiments. FIG. 10 is performed by a base station 170, e.g., under control of a control module 150, at least in part.

In block 1010, the BS 170 determines one or more parameters to be used by a UE 110 in order to identify the user equipment for measurement modification. The BS 170 in block 1020 signals the one or more parameters to the UE 110.

Without in any way limiting the scope, interpretation, or application of the claims appearing below, a technical effect and advantage of one or more of the example embodiments disclosed herein is stationarity of heterogenous devices can be detected. Another technical effect and advantage of one or more of the example embodiments disclosed herein is that stationary UEs can decrease the signaling stemming from energy heavy mobility signaling procedures, thereby saving energy.

As used in this application, the term "circuitry" may refer to one or more or all of the following:

(a) hardware-only circuit implementations (such as implementations in only analog and/or digital circuitry) and
(b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Embodiments herein may be implemented in software (executed by one or more processors), hardware (e.g., an application specific integrated circuit), or a combination of software and hardware. In an example embodiment, the software (e.g., application logic, an instruction set) is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted, e.g., in FIG. 1. A computer-readable medium may comprise a computer-readable storage medium (e.g., memories 125, 155, 171 or other device) that may be any media or means that can contain, store, and/or transport the instructions for use by or in connection with an instruction execution system, apparatus, or device, such as a computer. A computer-readable storage medium does not comprise propagating signals.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

The following abbreviations that may be found in the specification and/or the drawing figures are defined as follows:

| | |
|---|---|
| 3GPP | third generation partnership project |
| 5G | fifth generation |
| 5GC | 5G core network |
| AMF | access and mobility management function |
| BS | base station |
| BW | bandwidth |
| CCE | Control Channel Element |
| CU | central unit |
| dB | decibels |
| DL | downlink |
| DRX | Discontinuous Reception |
| DU | distributed unit |
| eNB (or eNodeB) | evolved Node B (e.g., an LTE base station) |
| EN-DC | E-UTRA-NR dual connectivity |
| en-gNB or En-gNB | node providing NR user plane and control plane protocol terminations towards the UE, and acting as secondary node in EN-DC |

| | |
|---|---|
| E-UTRA | evolved universal terrestrial radio access, i.e., the LTE radio access technology |
| gNB (or gNodeB) | base station for 5G/NR, i.e., a node providing NR user plane and control plane protocol terminations towards the UE, and connected via the NG interface to the 5GC |
| I/F | interface |
| LoS | line of sight |
| LTE | long term evolution |
| MAC | medium access control |
| meas. | measurement |
| MME | mobility management entity |
| ng or NG | next generation |
| ng-eNB or NG-eNB | next generation eNB |
| NLoS | Non Line of Sight |
| NR | new radio |
| N/W or NW | network |
| PDCCH | physical downlink control channel |
| PDCP | packet data convergence protocol |
| PHY | physical layer |
| RAN | radio access network |
| Rel | release |
| RLC | radio link control |
| RLF | radio link failure |
| RNA | RAN-based Notification Area |
| RRH | remote radio head |
| RRC | radio resource control |
| RRM | Radio Resource Management |
| RSRP | Reference Signal Receive Power |
| RU | radio unit |
| Rx | receiver |
| SDAP | service data adaptation protocol |
| SGW | serving gateway |
| SIB2 | System Information Block Type 2 |
| SMF | session management function |
| TS | technical specification |
| Tx | transmitter |
| UE | user equipment (e.g., a wireless, typically mobile device) |
| UL | uplink |
| UPF | user plane function |

**Claims**

1. A method, comprising:

   receiving, by a user equipment (110) connected to a base station (170) in a wireless network, one or more parameters to be used by the user equipment to identify the user equipment (110) for measurement modification;
   determining, by the user equipment, an estimate of a level of signal variation for signals received at the user equipment (110);
   identifying, using at least the one or more parameters, the user equipment (110) for measurement modification based at least on the estimate of the level of signal variation, wherein identifying the user equipment (110) for measurement modification comprises determining that the user equipment (110) is stationary and identifying the user equipment (110) as suitable for measurement modification because the user equipment (110) is stationary; and
   modifying, by the user equipment (110), a time between measurements for radio resource management from a current time to a different time in response to the user equipment (110) being identified for measurement modification.

2. The method of claim 1, wherein the current time and the different time are configured via signaling received by the user equipment (110) from the base station (170).

3. The method of any one of claims 1 or 2, wherein the determining the estimate of the level of signal variation uses one or more parameters involving a state of the user equipment (110).

4. The method of claim 3, wherein the one or more parameters involving a state of the user equipment (110) comprise a received power; and/or

    wherein the one or more parameters involving a state of the user equipment (110) comprise a location of the user equipment (110) within a cell formed by the base station (170); and/or
    wherein the one or more parameters involving a state of the user equipment (110) comprise antenna type of the user equipment (110).

5. The method of any one of claims 1 to 4, wherein:

    the determining the level of signal variation received at the user equipment (110) comprises selecting one of multiple groups indicating variations of the signal; and
    wherein:

        the determining the selected one of the multiple groups comprises:

            A) determining whether the user equipment (110) is configured to have high variation in received signals; and
            B) determining whether the user equipment (110) has a location as being in an outer region of a cell or as not being in the outer region of the cell;

        the determining the selected one of the multiple groups uses results of both (A) and (B) to determine the selected group ; and

    wherein:
    determining whether the user equipment (110) is configured to have high variation in received signals comprises determining that a capability of the user equipment (110) is a capability that can lead to high variation and assigning the user equipment (110) to have high variation in response.

6. The method of claim 5, wherein:

    the one or more parameters to be used to identify the user equipment (110) for measurement modification are multiple parameters; and
    identifying the user equipment (110) for measurement modification based at least on the estimate of the level of signal variation further comprises using the multiple parameters along with the estimate of the level of signal variation to identify the user equipment (110) for measurement modification.

7. The method of claim 6, wherein the multiple parameters comprise a threshold, and wherein identifying the user equipment (110) for measurement modification based at least on the estimate of the level of signal variation comprises:

    in response to the user equipment (110) having a high signal variation, using by the user equipment (110) a first of the multiple parameters and the threshold to determine whether a first condition is fulfilled;
    in response to the user equipment (110) having a medium signal variation, using by the user equipment (110) a second of the multiple parameters and the threshold to determine whether a second condition is fulfilled;
    otherwise, the UE (110) uses the threshold to determine whether a third condition is fulfilled; and
    in response to any of the first, second, or third conditions being fulfilled, identifying the user equipment (110) for measurement modification; or
    wherein the multiple parameters comprise a threshold and first and second timer parameters, and wherein identifying the user equipment (110) for measurement modification based at least on the estimate of the level of signal variation comprises:

        using by the user equipment (110) the first timer parameter of the multiple parameters to determine the estimate of the level of signal variance as having the high signal variation;
        in response to the user equipment (110) having the high signal variation, using by the user equipment (110) a first of the multiple parameters and the threshold to determine whether a first condition is fulfilled;

using by the user equipment (110) the second timer parameter of the multiple parameters to determine the estimate of the level of signal variance as having a medium signal variation;

in response to the user equipment (110) having the medium signal variation, using by the user equipment (110) a second of the multiple parameters and the threshold to determine whether a second condition is fulfilled;

otherwise, the UE (110) uses the threshold to determine whether a third condition is fulfilled; and

in response to any of the first, second, or third conditions being fulfilled, identifying the user equipment (110) for measurement modification.

8. A method, comprising:

determining, by a base station (170), one or more parameters to be used by a user equipment (110) in order to identify the user equipment (110) for measurement modification; and

signaling by the base station (170) the one or more parameters to the user equipment (110), wherein the one or more parameters to be used by the user equipment (110) in order to identify the user equipment (110) for measurement modification are for determining that the user equipment (110) is stationary and suitable for measurement modification because the user equipment (110) is stationary; and

wherein the measurement modification is to adjust by the user equipment a time between measurements for radio resource management from a current time to a different time in response to the user equipment (110) being identified for measurement modification, and wherein the base station (170) signals the current time and the different time toward the user equipment (110).

9. The method claim 8, wherein the one or more parameters comprise parameters for multiple groups indicating variations of the signal, values of the parameters for the multiple groups are determined by the base station (170) using one or more of the following processes:

using site or cell or both site and cell measurement campaigns;

building an estimator following user uplink reference signals; or

using parameters affected by radio resource measurement modification;

further comprising coordinating results of the one or more processes in order to set the values of the parameters for the multiple groups; and/or

wherein the parameters for the multiple groups comprise parameters for a medium variation group and a high variation group;

wherein the parameters for the multiple groups further comprise a threshold, or the threshold and first and second timer parameters.

10. A computer program, comprising code for performing the methods of any of claims 1 to 7, when executed by a processor of a user equipment (110).

11. A user equipment (110), comprising means for performing:

receiving, by the user equipment (110) connected to a base station (170) in a wireless network, one or more parameters to be used by the user equipment to identify the user equipment (110) for measurement modification;

determining by the user equipment an estimate of a level of signal variation for signals received at the user equipment (110);

identifying, using at least the one or more parameters, the user equipment (110) for measurement modification based at least on the estimate of the level of signal variation wherein identifying the user equipment (110) for measurement modification comprises determining that the user equipment (110) is stationary and identifying the user equipment (110) as suitable for measurement modification because the user equipment (110) is stationary; and

modifying, by the user equipment (110), a time between measurements for radio resource management from a current time to a different time in response to the user equipment (110) being identified for measurement modification.

12. A base station, comprising means for performing:

determining, by the base station (170), one or more parameters to be used by a user equipment (110) in order to identify the user equipment (110) for measurement modification; and

signaling by the base station the one or more parameters to the user equipment (110), wherein the one or more parameters to be used by the user equipment (110) in order to identify the user equipment (110) for measurement modification are for determining that the user equipment (110) is stationary and suitable for measurement modification because the user equipment (110) is stationary.

**Patentansprüche**

1.  Verfahren, das Folgendes umfasst:

    Empfangen von einem oder mehreren Parametern, die von einer Teilnehmereinrichtung zu verwenden sind, um die Teilnehmereinrichtung (110) für eine Messmodifikation zu identifizieren, durch die Teilnehmereinrichtung (110), die mit einer Basisstation (170) in einem drahtlosen Netzwerk verbunden ist;
    Bestimmen einer Schätzung eines Maßes einer Signalabweichung durch die Teilnehmereinrichtung für Signale, die an der Teilnehmereinrichtung (110) empfangen werden;
    Identifizieren der Teilnehmereinrichtung (110) für eine Messmodifikation unter Verwendung des einen oder der mehreren Parameter mindestens auf Basis der Schätzung des Maßes der Signalabweichung, wobei das Identifizieren der Teilnehmereinrichtung (110) für eine Messmodifikation das Bestimmen, dass die Teilnehmereinrichtung (110) stationär ist, und das Identifizieren der Teilnehmereinrichtung (110) als für eine Messmodifikation geeignet umfasst, weil die Teilnehmereinrichtung (110) stationär ist; und
    Modifizieren einer Zeit zwischen Messungen für eine Funkressourcenverwaltung von einer aktuellen Zeit in eine andere Zeit durch die Teilnehmereinrichtung (110) in Reaktion darauf, dass die Teilnehmereinrichtung (110) für eine Messmodifikation identifiziert ist.

2.  Verfahren nach Anspruch 1, wobei die aktuelle Zeit und die andere Zeit via eine Signalisierung ausgelegt werden, die von der Teilnehmereinrichtung (110) von der Basisstation (170) empfangen wird.

3.  Verfahren nach einem der Ansprüche 1 oder 2, wobei das Bestimmen der Schätzung des Maßes der Signalabweichung einen oder mehrere Parameter verwendet, die sich auf einen Zustand der Teilnehmereinrichtung (110) beziehen.

4.  Verfahren nach Anspruch 3, wobei der eine oder die mehreren Parameter, die sich auf einen Zustand der Teilnehmereinrichtung (110) beziehen, eine Empfangsleistung umfassen; und/oder

    wobei der eine oder die mehreren Parameter, die sich auf einen Zustand der Teilnehmereinrichtung (110) beziehen, einen Standort der Teilnehmereinrichtung (110) in einer Zelle umfassen, die durch die Basisstation (170) gebildet wird; und/oder
    wobei der eine oder die mehreren Parameter, die sich auf einen Zustand der Teilnehmereinrichtung (110) beziehen, einen Antennentyp der Teilnehmereinrichtung (110) umfassen.

5.  Verfahren nach einem der Ansprüche 1 bis 4, wobei:

    das Bestimmen des Maßes der Signalabweichung, die an der Teilnehmereinrichtung (110) empfangen wird, das Auswählen von einer von mehreren Gruppen umfasst, die Abweichungen des Signals anzeigen; und
    wobei:

    das Bestimmen der ausgewählten der mehreren Gruppen Folgendes umfasst:

    A) Bestimmen, ob die Teilnehmereinrichtung (110) dazu ausgelegt ist, eine hohe Abweichung bei empfangenen Signalen aufzuweisen; und
    B) Bestimmen, ob die Teilnehmereinrichtung (110) einen Standort aufweist, der sich in einer äußeren Region einer Zelle oder nicht in der äußeren Region der Zelle befindet;

    das Bestimmen der ausgewählten der mehreren Gruppen Ergebnisse sowohl von (A) als auch von (B) verwendet, um die ausgewählte Gruppe zu bestimmen; und
    wobei:

das Bestimmen, ob die Teilnehmereinrichtung (110) dazu ausgelegt ist, eine hohe Abweichung bei empfangenen Signalen aufzuweisen, das Bestimmen, dass eine Fähigkeit der Teilnehmereinrichtung (110) eine Fähigkeit ist, die zu einer hohen Abweichung führt, und in Reaktion das Zuweisen der Teilnehmereinrichtung (110), eine hohe Abweichung zu haben, umfasst.

6. Verfahren nach Anspruch 5, wobei:

der eine oder die mehreren Parameter, die zum Identifizieren der Teilnehmereinrichtung (110) für eine Messmodifikation zu verwenden sind, mehrere Parameter sind; und

das Identifizieren der Teilnehmereinrichtung (110) für eine Messmodifikation mindestens auf Basis der Schätzung des Maßes der Signalabweichung ferner das Verwenden der mehreren Parameter zusammen mit der Schätzung des Maßes der Signalabweichung umfasst, um die Teilnehmereinrichtung (110) für eine Messmodifikation zu identifizieren.

7. Verfahren nach Anspruch 6, wobei die mehreren Parameter einen Schwellwert umfassen, und wobei das Identifizieren der Teilnehmereinrichtung (110) für eine Messmodifikation mindestens auf Basis der Schätzung des Maßes der Signalabweichung Folgendes umfasst:

in Reaktion darauf, dass die Teilnehmereinrichtung (110) eine hohe Signalabweichung aufweist, Verwenden eines ersten der mehreren Parameter und des Schwellwerts durch die Teilnehmereinrichtung (110), um zu bestimmen, ob eine erste Bedingung erfüllt ist;
in Reaktion darauf, dass die Teilnehmereinrichtung (110) eine mittlere Signalabweichung aufweist, Verwenden eines zweiten der mehreren Parameter und des Schwellwerts durch die Teilnehmereinrichtung (110), um zu bestimmen, ob eine zweite Bedingung erfüllt ist;
andernfalls verwendet die UE (110) den Schwellwert, um zu bestimmen, ob eine dritte Bedingung erfüllt ist; und
in Reaktion darauf, dass eine der ersten, der zweiten oder der dritten Bedingung erfüllt ist, Identifizieren der Teilnehmereinrichtung (110) für eine Messmodifikation; oder
wobei die mehreren Parameter einen Schwellwert und einen ersten und einen zweiten Timerparameter umfassen, und wobei das Identifizieren der Teilnehmereinrichtung (110) für eine Messmodifikation mindestens auf Basis der Schätzung des Maßes der Signalabweichung Folgendes umfasst:

Verwenden des ersten Timerparameters der mehreren Parameter durch die Teilnehmereinrichtung (110), um zu bestimmen, dass die Schätzung des Maßes der Signalvarianz die hohe Signalabweichung aufweist;
in Reaktion darauf, dass die Teilnehmereinrichtung (110) die hohe Signalabweichung aufweist, Verwenden eines ersten der mehreren Parameter und des Schwellwerts durch die Teilnehmereinrichtung (110), um zu bestimmen, ob eine erste Bedingung erfüllt ist;
Verwenden des zweiten Timerparameters der mehreren Parameter durch die Teilnehmereinrichtung (110), um zu bestimmen, dass die Schätzung des Maßes der Signalvarianz die mittlere Signalabweichung aufweist;
in Reaktion darauf, dass die Teilnehmereinrichtung (110) die mittlere Signalabweichung aufweist, Verwenden eines zweiten der mehreren Parameter und des Schwellwerts durch die Teilnehmereinrichtung (110), um zu bestimmen, ob eine zweite Bedingung erfüllt ist;
andernfalls verwendet die UE (110) den Schwellwert, um zu bestimmen, ob eine dritte Bedingung erfüllt ist; und
in Reaktion darauf, dass eine der ersten, der zweiten oder der dritten Bedingung erfüllt ist, Identifizieren der Teilnehmereinrichtung (110) für eine Messmodifikation.

8. Verfahren, das Folgendes umfasst:

Bestimmen von einem oder mehreren Parametern, die von einer Teilnehmereinrichtung (110) zu verwenden sind, durch eine Basisstation (170), um die Teilnehmereinrichtung (110) für eine Messmodifikation zu identifizieren; und
Signalisieren des einen oder der mehreren Parameter durch die Basisstation (170) an die Teilnehmereinrichtung (110), wobei der eine oder die mehreren Parameter, die von der Teilnehmereinrichtung (110) zu verwenden sind, um die Teilnehmereinrichtung (110) für eine Messmodifikation zu identifizieren, dem Bestimmen dienen, dass die Teilnehmereinrichtung (110) stationär und für eine Messmodifikation geeignet ist, weil die Teilnehmereinrichtung (110) stationär ist; und
wobei die Messmodifikation eine Zeit zwischen Messungen für eine Funkressourcenverwaltung durch die Teilnehmereinrichtung von einer aktuellen Zeit in eine andere Zeit in Reaktion darauf anpassen soll, dass die Teilnehmereinrichtung (110) für eine Messmodifikation identifiziert ist, und wobei die Basisstation (170) die aktuelle Zeit und die andere Zeit an die Teilnehmereinrichtung (110) signalisiert.

9. Verfahren nach Anspruch 8, wobei der eine oder die mehreren Parameter Parameter für mehrere Gruppen umfassen, die Abweichungen des Signals anzeigen, Werte der Parameter für die mehreren Gruppen von der Basisstation (170) unter Verwendung von einem oder mehreren der folgenden Prozesse bestimmt werden:

Verwenden von Orts- oder Zell- oder sowohl von Orts- als auch von Zellmesskampagnen;
Aufbauen eines Schätzers, der Benutzeruplinkreferenzsignale verfolgt; oder
Verwenden von Parametern, die durch eine Funkressourcenmessmodifikation beeinträchtigt werden;
das ferner das Koordinieren von Ergebnissen des einen oder der mehreren Prozesse umfasst, um die Werte der Parameter für die mehreren Gruppen einzustellen; und/oder
wobei die Parameter für die mehreren Gruppen Parameter für eine mittlere Abweichungsgruppe und eine hohe Abweichungsgruppe umfassen;
wobei die Parameter für die mehreren Gruppen ferner einen Schwellwert oder den Schwellwert und einen ersten und einen zweiten Timerparameter umfassen.

10. Computerprogramm, das einen Code zum Durchführen der Verfahren nach einem der Ansprüche 1 bis 7 umfasst, wenn er von einem Prozessor einer Teilnehmereinrichtung (110) ausgeführt wird.

11. Teilnehmereinrichtung (110), die Mittel zum Durchführen von Folgendem umfasst:

Empfangen von einem oder mehreren Parametern, die von der Teilnehmereinrichtung zu verwenden sind, um die Teilnehmereinrichtung (110) für eine Messmodifikation zu identifizieren, durch die Teilnehmereinrichtung (110), die mit einer Basisstation (170) in einem drahtlosen Netzwerk verbunden ist;
Bestimmen einer Schätzung eines Maßes einer Signalabweichung durch die Teilnehmereinrichtung für Signale, die an der Teilnehmereinrichtung (110) empfangen werden;
Identifizieren der Teilnehmereinrichtung (110) für eine Messmodifikation unter Verwendung des einen oder der mehreren Parameter mindestens auf Basis der Schätzung des Maßes der Signalabweichung, wobei das Identifizieren der Teilnehmereinrichtung (110) für eine Messmodifikation das Bestimmen, dass die Teilnehmereinrichtung (110) stationär ist, und das Identifizieren der Teilnehmereinrichtung (110) als für eine Messmodifikation geeignet umfasst, weil die Teilnehmereinrichtung (110) stationär ist; und
Modifizieren einer Zeit zwischen Messungen für eine Funkressourcenverwaltung von einer aktuellen Zeit in eine andere Zeit durch die Teilnehmereinrichtung (110) in Reaktion darauf, dass die Teilnehmereinrichtung (110) für eine Messmodifikation identifiziert ist.

12. Basisstation, die Mittel zum Durchführen von Folgendem umfasst:

Bestimmen von einem oder mehreren Parametern, die von einer Teilnehmereinrichtung (110) zu verwenden sind, durch die Basisstation (170), um die Teilnehmereinrichtung (110) für eine Messmodifikation zu identifizieren; und
Signalisieren des einen oder der mehreren Parameter durch die Basisstation an die Teilnehmereinrichtung (110), wobei der eine oder die mehreren Parameter, die von der Teilnehmereinrichtung (110) zu verwenden sind, um die Teilnehmereinrichtung (110) für eine Messmodifikation zu identifizieren, dem Bestimmen dienen, dass die Teilnehmereinrichtung (110) stationär und für eine Messmodifikation geeignet ist, weil die Teilnehmereinrichtung (110) stationär ist.

## Revendications

1. Procédé comprenant les étapes suivantes :

recevoir par un équipement utilisateur (110) connecté à une station de base (170) dans un réseau sans fil un ou plusieurs paramètres à utiliser par l'équipement utilisateur pour identifier l'équipement utilisateur (110) pour une modification de mesure ;
déterminer par l'équipement utilisateur une estimation d'un niveau de variation de signal de signaux reçus au niveau de l'équipement utilisateur (110) ;

à l'aide d'au moins les un ou plusieurs paramètres, identifier l'équipement utilisateur (110) pour la modification de mesure, en se basant au moins sur l'estimation du niveau de variation de signal, dans lequel l'identification de l'équipement utilisateur (110) pour la modification de mesure comprend le fait de déterminer que l'équipement utilisateur (110) est immobile et d'identifier l'équipement utilisateur (110) comme étant adapté pour la modification de mesure étant donné que l'équipement utilisateur (110) est immobile ; et

modifier par l'équipement utilisateur (110) un temps entre les mesures d'une gestion de ressources radio d'un temps actuel à un temps différent, en réponse à l'identification de l'équipement utilisateur (110) pour la modification de mesure.

2. Procédé de la revendication 1, dans lequel le temps actuel et le temps différent sont configurés via une signalisation reçue par l'équipement utilisateur (110) en provenance de la station de base (170).

3. Procédé de l'une des revendications 1 ou 2, dans lequel la détermination de l'estimation du niveau de variation de signal utilise un ou plusieurs paramètres impliquant un état de l'équipement utilisateur (110).

4. Procédé de la revendication 3, dans lequel les un ou plusieurs paramètres impliquant un état de l'équipement utilisateur (110) comprennent une puissance reçue ; et/ou

dans lequel les un ou plusieurs paramètres impliquant un état de l'équipement utilisateur (110) comprennent un emplacement de l'équipement utilisateur (110) dans une cellule formée par la station de base (170) ; et/ou dans lequel les un ou plusieurs paramètres impliquant un état de l'équipement utilisateur (110) comprennent un type d'antenne de l'équipement utilisateur (110).

5. Procédé de l'une des revendications 1 à 4, dans lequel :

la détermination du niveau de variation de signal reçu au niveau de l'équipement utilisateur (110) comprend la sélection d'un groupe dans de multiples groupes indiquant des variations du signal ; et dans lequel :

la détermination du groupe sélectionné des multiples groupes comprend :

A) le fait de déterminer si l'équipement utilisateur (110) est configuré pour avoir une variation élevée des signaux reçus ; et
B) le fait de déterminer si un emplacement de l'équipement utilisateur (110) se trouve dans une région extérieure d'une cellule ou ne se trouve pas dans la région extérieure de la cellule ; la détermination du groupe sélectionné des multiples groupes utilise les résultats de (A) et (B) pour déterminer le groupe sélectionné ; et

dans lequel :
le fait de déterminer si l'équipement utilisateur (110) est configuré pour avoir une variation élevée dans les signaux reçus comprend le fait de déterminer qu'une capacité de l'équipement utilisateur (110) est une capacité qui peut conduire à une variation élevée, et d'attribuer l'équipement utilisateur (110) de sorte à avoir une variation élevée en réponse.

6. Procédé de la revendication 5, dans lequel :

les un ou plusieurs paramètres à utiliser pour identifier l'équipement utilisateur (110) pour la modification de mesure sont des paramètres multiples ; et
l'identification de l'équipement utilisateur (110) pour la modification de mesure en se basant au moins sur l'estimation du niveau de variation de signal comprend en outre l'utilisation des paramètres multiples avec l'estimation du niveau de variation de signal pour identifier l'équipement utilisateur (110) pour la modification de mesure.

7. Procédé de la revendication 6, dans lequel les paramètres multiples comprennent un seuil, et dans lequel l'identification de l'équipement utilisateur (110) pour la modification de mesure en se basant au moins sur l'estimation du niveau de variation de signal comprend :

en réponse à une variation de signal élevée de l'équipement utilisateur (110), l'utilisation par l'équipement utilisateur (110) d'un premier des paramètres multiples et du seuil pour déterminer si une première condition est remplie ;

en réponse à une variation de signal moyenne de l'équipement utilisateur (110), l'utilisation par l'équipement utilisateur (110) d'un deuxième des paramètres multiples et du seuil pour déterminer si une deuxième condition est remplie ;

dans le cas contraire, l'UE (110) utilise le seuil pour déterminer si une troisième condition est remplie ; et

en réponse à la satisfaction de la première, de la deuxième ou de la troisième condition, l'identification de l'équipement utilisateur (110) pour la modification de mesure ; ou

dans lequel les paramètres multiples comprennent un seuil et des premier et deuxième paramètres de temporisateur, et dans lequel l'identification de l'équipement utilisateur (110) pour la modification de mesure en se basant au moins sur l'estimation du niveau de variation de signal comprend :

l'utilisation par l'équipement utilisateur (110) du premier paramètre de temporisateur des paramètres multiples pour déterminer l'estimation du niveau de variation de signal comme ayant la variance de signal élevée ;

en réponse à une variation de signal élevée de l'équipement utilisateur (110), l'utilisation par l'équipement utilisateur (110) d'un premier des paramètres multiples et du seuil pour déterminer si une première condition est remplie ;

l'utilisation par l'équipement utilisateur (110) du deuxième paramètre de temporisateur des paramètres multiples pour déterminer l'estimation du niveau de la variance de signal comme ayant une variation de signal moyenne ;

en réponse à une variation de signal moyenne de l'équipement utilisateur (110), l'utilisation par l'équipement utilisateur (110) d'un deuxième des paramètres multiples et du seuil pour déterminer si une deuxième condition est remplie ;

dans le cas contraire, l'UE (110) utilise le seuil pour déterminer si une troisième condition est remplie ; et

en réponse à la satisfaction de la première, de la deuxième ou de la troisième condition, l'identification de l'équipement utilisateur (110) pour la modification de mesure.

8. Procédé comprenant les étapes suivantes :

déterminer par une station de base (170) un ou plusieurs paramètres à utiliser par un équipement utilisateur (110) afin d'identifier l'équipement utilisateur (110) pour la modification de mesure ; et

signaler par la station de base (170) les un ou plusieurs paramètres à l'équipement utilisateur (110), dans lequel les un ou plusieurs paramètres à utiliser par l'équipement utilisateur (110) afin d'identifier l'équipement utilisateur (110) pour la modification de mesure sont destinés à déterminer que l'équipement utilisateur (110) est immobile et qu'il est adapté à la modification de mesure, étant donné que l'équipement utilisateur (110) est immobile ; et dans lequel la modification de mesure consiste à ajuster par l'équipement utilisateur un temps entre les mesures d'une gestion de ressources radio d'un temps actuel à un temps différent en réponse à l'identification de l'équipement utilisateur (110) pour la modification de mesure, et dans lequel la station de base (170) signale le temps actuel et le temps différent à l'équipement utilisateur (110).

9. Procédé selon la revendication 8, dans lequel les un ou plusieurs paramètres comprennent des paramètres pour des groupes multiples indiquant des variations du signal, les valeurs des paramètres pour les groupes multiples sont déterminées par la station de base (170) à l'aide d'un ou plusieurs des processus suivants :

utiliser des campagnes de mesures de site ou de cellule, ou à la fois de site et de cellule ;

construire un estimateur à partir de signaux de référence de liaison montante d'utilisateur ; ou

utiliser des paramètres affectés par une modification de mesure ressources radio ;

comprenant en outre la coordination de résultats d'un ou plusieurs processus afin de fixer les valeurs des paramètres pour les groupes multiples ; et/ou

dans lequel les paramètres pour les groupes multiples comprennent des paramètres pour un groupe de variation moyenne et un groupe de variation élevée ;

dans lequel les paramètres pour les groupes multiples comprennent en outre un seuil, ou le seuil et des premier et deuxième paramètres de temporisateur.

10. Programme informatique, comprenant un code pour réaliser les procédés de l'une des revendications 1 à 7, lorsqu'il est exécuté par un processeur d'un équipement utilisateur (110).

**11.** Équipement utilisateur (110) comprenant des moyens pour effectuer ce qui suit :

recevoir par l'équipement utilisateur (110) connecté à une station de base (170) dans un réseau sans fil un ou plusieurs paramètres à utiliser par l'équipement utilisateur pour identifier l'équipement utilisateur (110) pour une modification de mesure ;

déterminer par l'équipement utilisateur une estimation d'un niveau de variation de signal de signaux reçus au niveau de l'équipement utilisateur (110) ;

à l'aide d'au moins les un ou plusieurs paramètres, identifier l'équipement utilisateur (110) pour la modification de mesure, en se basant au moins sur l'estimation du niveau de variation de signal dans lequel l'identification de l'équipement utilisateur (110) pour la modification de mesure comprend le fait de déterminer que l'équipement utilisateur (110) est immobile et d'identifier l'équipement utilisateur (110) comme étant adapté pour la modification de mesure étant donné que l'équipement utilisateur (110) est immobile ; et

modifier par l'équipement utilisateur (110) un temps entre les mesures d'une gestion de ressources radio d'un temps actuel à un temps différent, en réponse à l'identification de l'équipement utilisateur (110) pour la modification de mesure.

**12.** Station de base, comprenant des moyens pour effectuer ce qui suit :

déterminer par la station de base (170) un ou plusieurs paramètres à utiliser par un équipement utilisateur (110) afin d'identifier l'équipement utilisateur (110) pour la modification de mesure ; et

signaler par la station de base les un ou plusieurs paramètres à l'équipement utilisateur (110), dans laquelle les un ou plusieurs paramètres à utiliser par l'équipement utilisateur (110) afin d'identifier l'équipement utilisateur (110) pour la modification de mesure sont destinés à déterminer que l'équipement utilisateur (110) est immobile et qu'il est adapté à la modification de mesure, étant donné que l'équipement utilisateur (110) est immobile.

FIG. 1

FIG. 2

EP 4 233 338 B1

Omni antenna UE

**FIG. 3A**

Multipanel UE

**FIG. 3B**

| Parameter/ Event | High UE variation | Low UE variation | Why Cell Specific |
|---|---|---|---|
| 1 LoS / NLoS - Shadowing | Cell edge | Cell center | Environment effects |
| 2 UE rotation | Directional antenna | Omni antenna | Cell Antenna config |
| 3 Measurement accuracy | UE supports Low accuracy | UE supports High accuracy | Enviroment effects |

## FIG. 4

## FIG. 5

**FIG. 6**

FIG. 7

**FIG. 7A**

EP 4 233 338 B1

FIG. 8

Receive, by a user equipment connected to a base station in a wireless network, one or more parameters to be used to identify the user equipment for measurement modification — 950

Determine an estimate of a level of signal variation for signals received at the user equipment — 960

Identify, using at least the one or more parameters, the user equipment for measurement modification based at least on the estimate of the level of signal variation — 970

Modify, by the user equipment, a time between measurements for radio resource management from a current time to a different time in response to the user equipment being identified for measurement modification — 980

## FIG. 9

Determine, by a base station, one or more parameters to be used by a user equipment in order to identify the user equipment for measurement modification — 1010

Signal the one or more parameters to the user equipment — 1020

## FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2092666 A
- US 2016234747 A

- EP 3110200 A

**Non-patent literature cited in the description**

- **ERICSSON**. New SID on Support of Reduced Capability NR Devices. *RP-193238, 3GPP TSG RAN Meeting #86*, 09 December 2019

- *3GPP TR 22.804 V16.3.0*, July 2020
- *3GPP TS 36.304 V16.1.0*, July 2020